# EUROPÄISCHE PATENTANMELDUNG

(11) **EP 4 600 628 A1**
(43) Veröffentlichungstag der Anmeldung: **13.08.2025**
(21) Anmeldenummer: 24156786.6
(22) Anmeldetag: 09.02.2024
(51) Int. Cl.: G01M 17/007

(54) **VORRICHTUNG UND VERFAHREN ZUM TESTEN EINER SCHUTZEINRICHTUNG ZUR ABSICHERUNG EINES FAHRWEGS EINES FAHRZEUGS, INSBESONDERE EINES FAHRERLOSEN TRANSPORTFAHRZEUGS**

(71) Anmelder: SICK AG, 79183 Waldkirch (DE)
(72) Erfinder: Hagedorn, Stephan, 79232 March (DE)

(57) **Zusammenfassung**

Die Erfindung betrifft eine Vorrichtung zum Testen einer Schutzeinrichtung eines Fahrzeuges, insbesondere eines fahrerlosen Transportfahrzeugs, wobei die Schutzeinrichtung wenigstens einen Sensor zur Überwachung eines Fahrwegs des Fahrzeugs aufweist. Die Vorrichtung umfasst eine Basis und einen beweglich an der Basis angeordneten Testkörper, der von einer ersten Position in eine zweite Position verbringbar ist, wobei die Vorrichtung im Fahrweg des Fahrzeugs positionierbar und derart dimensioniert ist, dass die Vorrichtung im Fahrweg des Fahrzeugs nicht vom Sensor erfassbar ist oder bei Erfassung des Testkörpers keine sicherheitsgerichtete Aktion durch die Schutzeinrichtung ausgelöst wird, wenn sich der Testkörper in der ersten Position befindet und der Testkörper vom Sensor erfassbar ist und bei Erfassung des Testkörpers eine sicherheitsgerichtete Aktion durch die Schutzeinrichtung ausgelöst wird, wenn sich der Testkörper in der zweiten Position befindet.

## Beschreibung

Die Erfindung betrifft eine Vorrichtung und ein Verfahren zum Testen einer Schutzeinrichtung zur Absicherung eines Fahrwegs eines fahrerlosen Transportfahrzeugs.

Fahrerlose Transportfahrzeuge (sogenannte AGV, "Automated Guided Vehicle") werden in industriellen Umgebungen beispielsweise in der Logistik eingesetzt. Sie teilen sich dort häufig den gleichen Arbeits- beziehungsweise Bewegungsraum wie dort arbeitende oder anwesende Personen. Deshalb weisen diese Fahrzeuge Schutzeinrichtungen auf, die Sensoren zur Erkennung von Objekten und/oder Personen insbesondere im Fahrweg des AGV und entsprechende Auswerteeinheiten aufweisen. Oftmals werden hierfür Laserscanner eingesetzt, die in der Regel bewegliche Optiken und Vorrichtungen zur Lichtlaufzeitmessung aufweisen. Eine Alternative zur Verwendung von Laserscannern besteht in dem Einsatz von nach dem Prinzip der Lasertriangulation arbeitenden Überwachungssensoren. Die Schutzeinrichtungen weisen in der Regel einen Überwachungsbereich auf, in dem wenigstens ein Warnfeld und wenigstens ein Schutzfeld definiert werden kann. Tritt ein Objekt und/oder eine Person in das Schutzfeld der Schutzeinrichtung ein, muss diese eine sicherheitsgerichtete Reaktion auslösen, die eine Kollision des Fahrzeugs mit dem Objekt beziehungsweise der Person verhindert, beispielsweise ein Abbremsen des Fahrzeugs bis zum Stillstand. Diese Schutzfunktion sollte regelmäßig getestet werden, da sich der Bremsweg des Fahrzeugs aufgrund von Verschleiß und anderen Umgebungseinflüssen über die Gebrauchsdauer verändern kann und damit eine Dimension des konfigurierten Schutzfeldes nicht mehr ausreicht, um das Fahrzeug rechtzeitig zum Stehen zu bringen Zum Testen der Schutzeinrichtung beim Eindringen eines Objektes und/oder einer Person in das Schutzfeld muss daher eine Bremsung des Fahrzeugs bei voller Fahrt ausgelöst werden. Da ein Objekt im Fahrweg des Fahrzeugs jedoch in der Regel zunächst vom Warnfeld der Schutzeinrichtung erfasst wird, kann dies bereits zu einer Reaktion in Form einer Geschwindigkeitsreduzierung des Fahrzeugs führen, bevor das Objekt in das Schutzfeld eintritt, womit das Testergebnis verfälscht werden kann, da nicht mehr aus einer Maximalgeschwindigkeit abgebremst wird. Daraus folgt, dass das Auslösen des Schutzfeldes ohne vorherige Auslösung des Warnfeldes erfolgen muss. Das Objekt muss also in das Schutzfeld eingebracht werden, ohne vorher vom Warnfeld erfasst zu werden

Aus dem Automobilbereich sind Vorrichtungen bekannt, um Hindernisse in den Detektionsbereich von beispielsweise adaptiven Geschwindigkeitsregelanlagen oder Pre-Crash-Systemen einzufahren.

Die DE 10 2008 051 233 A1 zeigt eine solche Vorrichtung zum Testen einer Funktion eines Fahrerassistenzsystems in Kraftfahrzeugen, wobei Attrappen von im Straßenverkehr auftretenden bewegten Objekten mittels eines Schienensystems reproduzierbar im Verhältnis zur Position des sich bewegenden Kraftfahrzeugs bewegbar sind. Die Bewegung der Attrappen kann über Sensoren gesteuert werden, die die Position des Kraftfahrzeugs ermitteln können.

Derartige Testvorrichtungen sind in der Regel stationär angeordnet und aufgrund ihrer Größe nicht mobil einsetzbar, beispielsweise zum Testen von automatisierten Flurförderfahrzeugen im industriellen Umfeld, insbesondere im Rahmen einer jährlichen Inspektion der Schutzeinrichtung.

Es ist ebenfalls bekannt, Schutzeinrichtungen von fahrerlosen Transportfahrzeugen zum Testen derart umzuprogrammieren, dass beispielsweise im Warnfeld erfasste Objekte von der Schutzeinrichtung ignoriert werden, so dass nur vom Schutzfeld erfasste Objekte eine sicherheitsgerichtete Aktion auslösen. Nachteilig dabei ist, dass die Schutzeinrichtung nur in einem umprogrammierten Zustand und nicht in einem Originalzustand getestet wird. Zudem besteht ein Risiko, dass die Schutzeinrichtung nach dem Test nicht in den Originalzustand zurückversetzt wird.

Ausgehend von diesem Stand der Technik ist es daher Aufgabe der Erfindung, eine Vorrichtung und ein Verfahren zum Testen einer Schutzeinrichtung eines Fahrzeugs, insbesondere eines fahrerlosen Transportfahrzeugs bereitzustellen, welche einfach und flexibel einsetzbar ist.

Diese Aufgabe wird gelöst durch eine Vorrichtung zum Testen einer Schutzeinrichtung eines Fahrzeugs mit den Merkmalen des Anspruchs 1 beziehungsweise mit einem Verfahren zum Testen einer Schutzeinrichtung eines Fahrzeugs mit den Merkmalen des Anspruchs 11.

Die Erfindung geht von dem Grundgedanken aus, dass Schutzeinrichtungen von Fahrzeugen, insbesondere von fahrerlosen Transportfahrzeugen in der Regel derart eingerichtet sind, dass Objekte, die eine gewisse Größe, insbesondere eine Höhe über einer Fläche, beispielsweise einer Fahrbahn oder einem Boden einer Fabrikhalle, nicht überschreiten, nicht zum Auslösen einer sicherheitsgerichteten Aktion der Schutzeinrichtung führen. Dadurch soll verhindert werden, dass ein ungewolltes Auslösen der Schutzeinrichtung erfolgt, wenn beispielsweise durch eine Nickbewegung des Fahrzeugs bodennahe Objekte oder die Fahrbahn selbst vom Sensor erfasst werden. Dazu kann die Schutzeinrichtung beispielsweise derart eingerichtet sein, dass sich ein Überwachungsbereich der Schutzeinrichtung auf einer Mindesthöhe über der Fahrbahn beziehungsweise dem Boden der Fabrikhalle, auf der sich das Fahrzeug entlang eines Fahrwegs bewegt, befindet. Alternativ kann die Schutzeinrichtung dazu ausgebildet sein, erfasste Objekte mit einer vorgegebenen Maximalhöhe zu ignorieren, also keine sicherheitsgerichtete Aktion auszulösen, sofern das erfasste Objekt eine vorgegebene Maximalhöhe nicht überscheitet.

Eine erfindungsgemäße Vorrichtung zum Testen einer Schutzeinrichtung eines Fahrzeuges, die wenigstens einen Sensor zur Überwachung eines Fahrwegs des Fahrzeugs aufweist, umfasst dazu eine Basis und einen beweglich an der Basis angeordneten Testkörper. Der Testkörper ist von einer ersten Position in eine zweite Position verbringbar, beispielsweise durch Verschwenken oder Verschieben gegenüber der Basis mit fachüblichen mechanischen, elektromechanischen, pneumatischen oder hydraulischen Anordnungen. Als Fahrweg des Fahrzeugs ist hier insbesondere der Bereich beispielsweise einer Fahrbahn oder einer Produktionsfläche zu verstehen, der in Folge der Bewegung des Fahrzeugs von diesem überquert wird.

Die Vorrichtung ist im Fahrweg des Fahrzeugs positionierbar und derart dimensioniert, dass die Vorrichtung im Fahrweg des Fahrzeugs nicht vom Sensor der Schutzeinrichtung erfassbar ist oder eine Erfassung der Vorrichtung im Fahrweg keine sicherheitsgerichtete Aktion der Schutzeinrichtung auslöst, wenn sich der Testkörper in der ersten Position befindet und der Testkörper vom Sensor der Schutzeinrichtung erfasst und eine sicherheitsgerichtete Aktion der Schutzeinrichtung ausgelöst wird, wenn sich der Testkörper in der zweiten Position befindet. Wenn sich der Testkörper in der ersten Position befindet, kann die Vorrichtung bevorzugt so dimensioniert sein, dass eine Höhe der Vorrichtung geringer ist als eine Mindesthöhe eines Überwachungsbereichs der Schutzeinrichtung über einer Fahrbahn, auf der sich das Fahrzeug bewegt.

Die Erfindung hat den Vorteil, dass die Vorrichtung zum Testen der Schutzeinrichtung des Fahrzeugs im Fahrweg des Fahrzeugs positioniert sein kann, ohne dass eine sicherheitsgerichtete Aktion der Schutzeinrichtung ausgelöst wird. Die Vorrichtung ist somit im Vergleich zu den aus dem Stand der Technik bekannten stationären Vorrichtungen besonders flexibel einsetzbar und kann insbesondere zum Testen der Schutzeinrichtung am Einsatzort verwendet werden. Eine Umprogrammierung der Schutzeinrichtung zum Testen derselben ist ebenfalls nicht nötig.

Die Vorrichtung ist bevorzugt derart dimensioniert, dass ihre maximale Höhe 200 mm, besonders bevorzugt 150 mm, ganz besonders bevorzugt 100 mm nicht überschreitet, wenn sich der Testkörper in der ersten Position befindet. Damit kann sichergestellt werden, dass die Vorrichtung zum Testen von üblichen Schutzeinrichtungen für fahrerlose Transportfahrzeuge, insbesondere gemäß den Normen IEC 62046 beziehungsweise ISO 3691-4 geeignet ist.

Die Vorrichtung hat bevorzugt ein Gewicht von weniger als 10 kg. Besonders bevorzugt hat die Vorrichtung ein Gewicht von weniger als 5 kg. Dadurch kann die Vorrichtung sehr einfach von einer Person im Fahrweg des Fahrzeugs positioniert werden.

Die Vorrichtung kann bevorzugt eine eigene Spannungsquelle aufweisen und somit unabhängig von stationären Spannungsquellen mit elektrischer Spannung versorgt werden. Besonders bevorzugt kann die Vorrichtung eine Aufnahme für eine externe Spannungsquelle, beispielsweise eine so genannte Powerbank aufweisen.

Der Testkörper kann zwischen der ersten Position und der zweiten Position verschiebbar sein. Die Basis der Vorrichtung kann dabei eine Aufnahme für den Testkörper aufweisen, in der der Testkörper verschiebbar gelagert ist. Die Verschiebung kann bevorzugt durch ein Federelement erfolgen.

In einer alternativen Ausführungsform kann der Testkörper zwischen der ersten Position und der zweiten Position schwenkbar sein. Die Basis der Vorrichtung kann dabei eine Aufnahme für den Testkörper aufweisen, in der der Testkörper drehbar gelagert ist. Durch diese Ausführungsform lässt sich eine Vorrichtung mit besonders geringer Höhe realisieren.

Der Testkörper kann bevorzugt als zylindrischer Körper ausgebildet sein. Der Durchmesser des Testkörpers beträgt bevorzugt 70 mm. Damit kann beispielsweise eine Erkennung eines menschlichen Beines durch die Schutzeinrichtung normgerecht getestet werden.

Der Testkörper besteht bevorzugt aus einem flexiblen Material. Dadurch können Beschädigungen am Fahrzeug verhindert oder zumindest verringert werden, falls das Fahrzeug mit dem Testkörper zusammenstößt. Alternativ oder zusätzlich kann die Basis der Vorrichtung bevorzugt Gleitfüße und/oder Rollen aufweisen, wodurch die Vorrichtung auf der Fahrbahn verschoben werden kann, falls das Fahrzeug mit der Vorrichtung beziehungsweise dem Testkörper zusammenstößt. Dadurch können Beschädigungen am Fahrzeug weiter verhindert oder verringert werden.

Die Vorrichtung kann bevorzugt einen Abstandssensor zur Bestimmung eines Abstands zwischen der Vorrichtung und dem Fahrzeug aufweisen. Besonders bevorzugt ist eine Steuer- und Auswertungseinheit dazu ausgebildet, den Testkörper in Abhängigkeit des Abstands zwischen der Vorrichtung und dem Fahrzeug von der ersten Position in die zweite Position zu verbringen. Die Steuer- und Auswertungseinheit kann dazu insbesondere derart ausgebildet sein, den Abstand zwischen der Vorrichtung und dem Fahrzeug kontinuierlich zu bestimmen.

Die Steuer- und Auswertungseinheit kann bevorzugt dazu eingerichtet sein, Dimensionen eines Warnfelds und/oder eines Schutzfelds der Schutzeinrichtung zu empfangen und den Testkörper in Abhängigkeit der Dimension des Warnfelds oder des Schutzfelds von der ersten Position in die zweite Position zu verbringen, beispielsweise wenn der Abstand zwischen dem Fahrzeug und der Vorrichtung kleiner als die Ausdehnung des Warnfelds oder des Schutzfeldes in Fahrtrichtung des Fahrzeugs ist.

Die Steuer- und Auswertungseinheit kann bevorzugt dazu eingerichtet sein, eine Geschwindigkeit des Fahrzeugs zu bestimmen sowie einen Zeitverlauf der Geschwindigkeit und/oder des Abstands zwischen der Vorrichtung und dem Fahrzeug aufzuzeichnen. Dadurch kann beispielsweise der Bremsweg und/oder Bremsbeschleunigung des Fahrzeugs bestimmt werden.

Die Steuer- und Auswertungseinheit kann bevorzugt eine Datenbank zur Speicherung fahrzeugspezifischer Testergebnisse oder eine Schnittstelle zur Übermittlung fahrzeugspezifischer Testergebnisse aufweisen. So können beispielsweise bei regelmäßiger Fahrzeugtestung Testergebnisse fahrzeugspezifisch erfasst und/oder ausgewertet werden.

Die Steuer- und Auswertungseinheit kann einen oder mehrere digitale Rechenbausteine aufweisen, beispielsweise einen Mikroprozessor, ein FPGA oder ein ASIC und kann Teil der Vorrichtung oder zumindest teilweise extern vorgesehen sein.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Im Folgenden wird die Erfindung anhand von Ausführungsbeispielen unter Bezugnahme auf die Zeichnung im Einzelnen erläutert. In der Zeichnung zeigen:
- Fig. 1: eine schematische Draufsicht eines Fahrzeugs
- Fig. 2: eine schematische Seitenansicht einer erfindungsgemäßen Vorrichtung zum Testen einer Schutzeinrichtung eines Fahrzeuges.

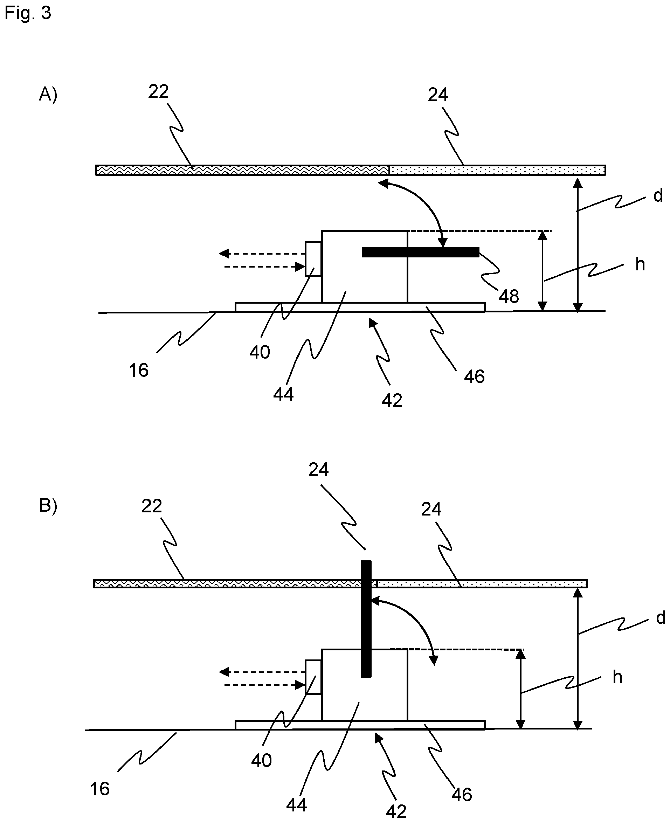

- Fig. 3: eine schematische Seitenansicht einer alternativen Ausführungsform einer erfindungsgemäßen Vorrichtung zum Testen einer Schutzeinrichtung eines Fahrzeuges.

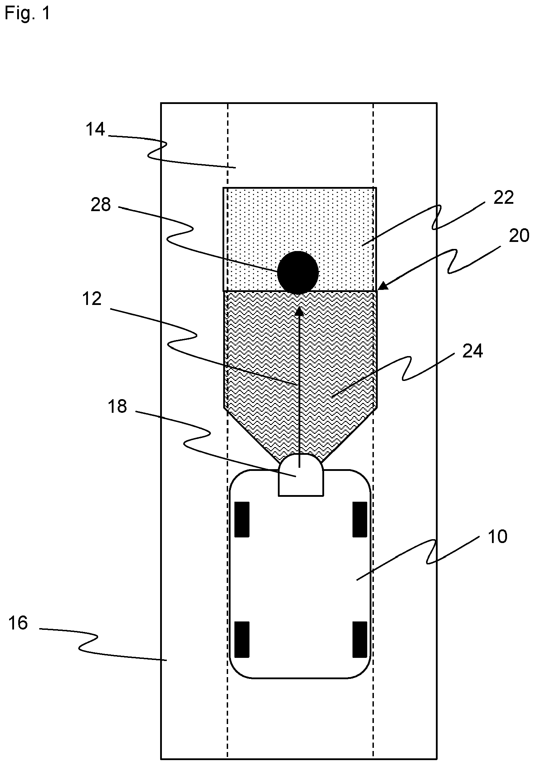

Figur 1 zeigt eine schematische Draufsicht eines Fahrzeugs 10, beispielsweise eines fahrerlosen Transportfahrzeugs, welches sich entlang einer Fahrtrichtung 12 auf einem Fahrweg 14 auf einer Fahrbahn 16 bewegt. Ein am Fahrzeug 10 befestigter Sensor 18 einer Schutzeinrichtung (nicht gezeigt), beispielsweise ein Laserscanner, tastet einen Überwachungsbereich 20 mit einem Warnfeld 22 und einem Schutzfeld 24 ab. Der Überwachungsbereich 20 deckt insbesondere einen Teil des Fahrwegs 14 in Fahrtrichtung 12 ab, so dass ein im Fahrweg 14 des Fahrzeugs 10 befindliches Objekt 26 im Überwachungsbereich 20 vom Sensor 18 der Schutzeinrichtung erfasst wird. Tritt das Objekt 26 in das Warnfeld 22 ein, kann durch die Schutzeinrichtung zunächst eine Warnung ausgegeben oder eine Verlangsamung des Fahrzeugs 10 veranlasst werden. Beim Eintreten des Objekts 26 in das Schutzfeld 24 wird üblicherweise eine sicherheitsgerichtete Aktion durch die Schutzeinrichtung ausgelöst, beispielsweise ein Abbremsen des Fahrzeugs 10 bis zum Stillstand.

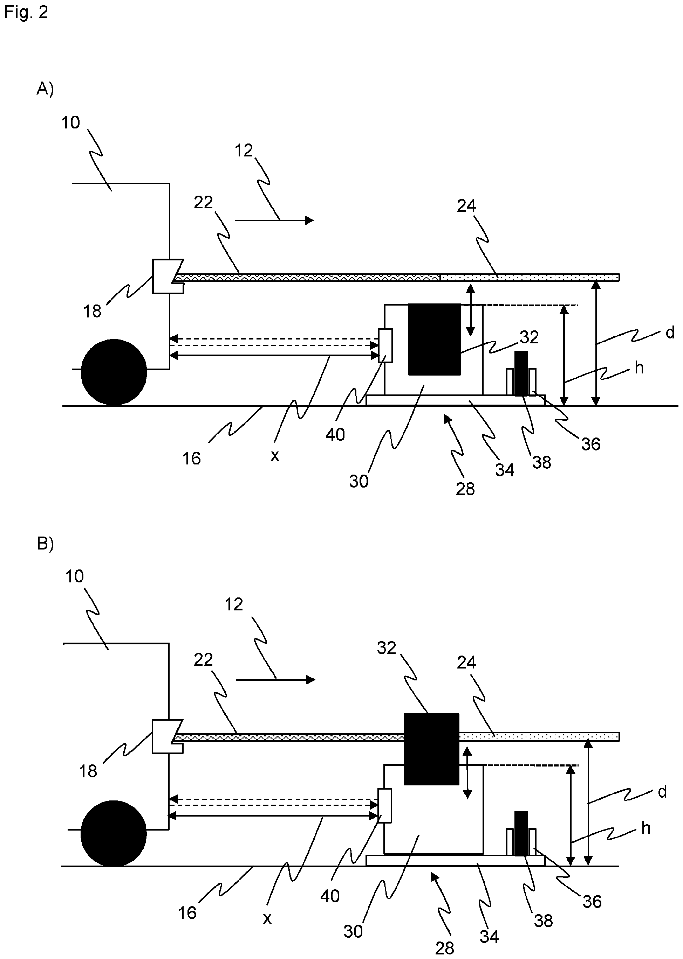

Figur 2 zeigt eine schematische Seitenansicht einer erfindungsgemäßen Vorrichtung 28 zum Testen der Schutzeinrichtung des Fahrzeuges 10. Der vom Sensor 18 der Schutzeinrichtung abgetastete Überwachungsbereich 20 befindet sich in einem Abstand d oberhalb der Fahrbahn 16. Die Vorrichtung 28 ist im Fahrweg 14 des Fahrzeugs 10 positioniert und umfasst eine Basis 30 und einen beweglich an der Basis 30 angeordneten Testkörper 32, der durch Verschieben von einer ersten Position in eine zweite Position verbringbar ist. Die Basis 30 der Vorrichtung 28 ist auf einer Grundplatte 32 mit einer Aufnahme 36 für eine Powerbank 38 angeordnet, mit der die Vorrichtung 28 unabhängig von stationären Spannungsquellen mit elektrischer Spannung versorgt werden kann.

In A) befindet sich der Testkörper 32 der Vorrichtung 28 in der ersten Position und ist in der Basis 30 eingefahren. Die Vorrichtung 28 ist damit derart dimensioniert, dass sie nicht vom Sensor 18 des Fahrzeugs 10 erfasst werden kann, obwohl sie sich im Fahrweg 14 des Fahrzeugs 10 befindet. Insbesondere ist die Höhe h der Vorrichtung 28 geringer als die Mindesthöhe Hₘᵢₙ des Überwachungsbereichs 20 über der Fahrbahn 16. Damit wird keine Aktion der Schutzeinrichtung ausgelöst, insbesondere keine Verlangsamung des Fahrzeugs 10.

In B) befindet sich der Testkörper 32 der Vorrichtung 28 in der zweiten Position und ist aus der Basis 30 ausgefahren. Damit ragt der Testkörper 32 im Ausführungsbeispiel in das Schutzfeld 24 des Überwachungsbereich 20 des Sensors 18 hinein. Der Testkörper 32 kann also vom Sensor 18 erfasst werden und die Schutzeinrichtung kann eine sicherheitsgerichtete Aktion auslösen, ohne dass eine vorherige Beeinflussung des Fahrzeugs 10, beispielsweise eine Verlangsamung erfolgt ist.

Die Vorrichtung weist weiterhin einen Abstandssensor 40 zum Bestimmen eines Abstands x zwischen dem Fahrzeug 10 und der Vorrichtung 28 auf. Eine Steuer- und Auswertungseinheit (nicht gezeigt) ist dazu eingerichtet, die Vorrichtung 28 derart anzusteuern, dass der Testkörper 32 in Abhängigkeit des Abstandes x der Vorrichtung 28 zum Fahrzeug 10 von der ersten in die zweite Position verbracht wird, beispielsweise wenn der Abstand x zwischen dem Fahrzeug 10 und der Vorrichtung 28 einen vorgegebenen Wert unterschreitet, insbesondere wenn der Abstand x kleiner als die Ausdehnung des Schutzfeldes 24 in Fahrtrichtung 12 des Fahrzeugs 10 ist. Dazu kann die Steuer- und Auswertungseinheit dazu eingerichtet sein, Dimensionen des Warnfelds 22 und/oder des Schutzfelds 24 zu empfangen Figur 2 zeigt eine schematische Seitenansicht einer alternativen Ausführungsform einer erfindungsgemäßen Vorrichtung 42 zum Testen einer Schutzeinrichtung eines Fahrzeuges 10, wobei lediglich die Vorrichtung 42 selbst sowie Warnfeld 22 und Schutzfeld 24 der Schutzeinrichtung dargestellt sind. ist. In Übereinstimmung mit der in Figur 1 gezeigten Ausführungsform weist die Vorrichtung 42 eine Basis 44 mit einer Grundplatte 46 sowie einen Abstandssensor 40 auf. Im Unterschied zu der in Figur 1 gezeigten Ausführungsform ist der Testkörper 48 schwenk- beziehungsweise klappbar an der Basis 44 angeordnet.

In A) ist der Testkörper 48 in einer ersten Position nach unten Richtung Grundplatte 46 geschwenkt, so dass er nicht in das Warnfeld 22 beziehungsweise das Schutzfeld 24 der Schutzeinrichtung hineinragt. Die Vorrichtung 42 wird also nicht vom Sensor der Schutzeinrichtung erfasst.

In B) ist der Testkörper 48 in einer zweiten Position so nach oben geschwenkt, dass er in das Schutzfeld 24 der Schutzeinrichtung hineinragt. Der Testkörper 48 wird also vom Sensor 18 der Schutzeinrichtung erfasst, so dass eine sicherheitsgerichtete Aktion durch die Schutzeinrichtung ausgelöst werden kann, ohne dass eine vorherige Beeinflussung des Fahrzeugs 10, beispielsweise eine Verlangsamung erfolgt ist.

### Bezugszeichenliste

- 10: Fahrzeug
- 12: Fahrtrichtung
- 14: Fahrweg
- 16: Fahrbahn
- 18: Sensor
- 20: Überwachungsbereich
- 22: Warnfeld
- 24: Schutzfeld
- 26: Objekt
- 28, 42: Vorrichtung
- 30,44: Basis
- 32, 48: Testkörper
- 34, 46: Grundplatte
- 36: Aufnahme
- 38: externe Spannungsquelle (Powerbank)
- 40: Abstandssensor
- Hₘᵢₙ: Mindesthöhe
- h: Höhe
- x: Abstand

## Patentansprüche

1. Vorrichtung (28, 42) zum Testen einer Schutzeinrichtung eines Fahrzeuges (10), insbesondere eines fahrerlosen Transportfahrzeugs, wobei die Schutzeinrichtung wenigstens einen Sensor (18) zur Überwachung eines Fahrwegs (14) des Fahrzeugs (10) aufweist, und die Vorrichtung (28, 42) eine Basis (30, 44) und einen beweglich an der Basis (30, 44) angeordneten Testkörper (32, 48) umfasst, wobei der Testkörper (32, 48) von einer ersten Position in eine zweite Position verbringbar ist,
**dadurch gekennzeichnet, dass** die Vorrichtung (28, 42) im Fahrweg (14) des Fahrzeugs (10) positionierbar und derart dimensioniert ist, dass die Vorrichtung (28, 42) im Fahrweg (14) des Fahrzeugs (10) nicht vom Sensor (18) erfassbar ist oder bei Erfassung des Testkörpers (32, 48) keine sicherheitsgerichtete Aktion der Schutzeinrichtung ausgelöst wird, wenn sich der Testkörper (32, 48) in der ersten Position befindet und der Testkörper (32, 48) vom Sensor (18) erfassbar ist und bei Erfassung des Testkörpers (32, 48) eine sicherheitsgerichtete Aktion der Schutzeinrichtung ausgelöst wird, wenn sich der Testkörper (32, 48) in der zweiten Position befindet.

2. Vorrichtung (28) nach Anspruch 1, wobei der Testkörper (32) zwischen der ersten Position und der zweiten Position verschiebbar ist.

3. Vorrichtung (42) nach Anspruch 1, wobei der Testkörper (48) zwischen der ersten Position und der zweiten Position schwenkbar ist.

4. Vorrichtung (28, 42) nach einem der vorherigen Ansprüche, wobei die Vorrichtung (28, 42) eine Aufnahme (36) für eine externe Spannungsquelle (38) aufweist

5. Vorrichtung (28, 42) einem der vorherigen Ansprüche, wobei die Vorrichtung (28, 42) einen Abstandssensor (40) zur Bestimmung eines Abstands (x) zwischen der Vorrichtung (28, 42) und dem Fahrzeug (10) aufweist.

6. Vorrichtung (28, 42) nach Anspruch 5, wobei eine Steuer- und Auswertungseinheit dazu ausgebildet ist, die Vorrichtung (28, 42) derart anzusteuern, dass der Testkörper (32, 48) in Abhängigkeit des Abstandes (x) zwischen der Vorrichtung (28, 42) und dem Fahrzeug (10) von der ersten Position in die zweite Position verbracht wird.

7. Vorrichtung (28, 42) nach Anspruch 6, wobei der Testkörper (32, 48) bei Unterschreiten eines vorgegebenen Abstandes zwischen Vorrichtung (28, 42) und Fahrzeug (10) von der ersten Position in die zweite Position verbracht wird.

8. Vorrichtung (28, 42) nach Anspruch 7, wobei der vorgegebene Abstand geringer als eine Ausdehnung eines Schutzfelds (24) der Schutzeinrichtung in einer Fahrtrichtung (12) des Fahrzeugs (10) ist

9. Vorrichtung (28, 42) nach Anspruch 5, wobei eine Steuer- und Auswertungseinheit dazu ausgebildet ist, eine Geschwindigkeit des Fahrzeugs (10) zu bestimmen.

10. Vorrichtung (28, 42) nach Anspruch 9, wobei die Steuer- und Auswertungseinheit dazu ausgebildet ist, einen Zeitverlauf der Geschwindigkeit und des Abstands (x) der Vorrichtung (28, 42) zum Fahrzeug (10) aufzuzeichnen.

11. Verfahren zum Testen einer Schutzeinrichtung eines Fahrzeugs (10), insbesondere eines fahrerlosen Transportfahrzeugs mit den Schritten:
- Positionieren einer Vorrichtung (28, 42) gemäß einem der vorherigen Ansprüche in einem Fahrweg (14) des Fahrzeugs (10).
- Verbringen des Testkörpers (32, 48) von der ersten Position in die zweite Position derart, dass der Testkörper (32, 48) von einem Sensor (18) einer Schutzeinrichtung des Fahrzeuges (10) erfassbar ist und eine Erfassung des Testkörpers durch den Sensor (18) eine sicherheitsgerichtete Aktion der Schutzeinrichtung auslöst.

12. Verfahren nach Anspruch 9, mit den weiteren Schritten
- Ermitteln eines Abstands (x) zwischen der Vorrichtung (28, 42) und dem Fahrzeug (10).
- Verbringen des Testkörpers (32, 48) von der ersten Position in die zweite Position, wenn der Abstand (x) einen vorgegebenen Wert unterschreitet.

13. Verfahren nach Anspruch 10, wobei der vorgegebene Wert eine Ausdehnung eines Schutzfeldes (24) der Schutzeinrichtung in einer Fahrtrichtung (12) des Fahrzeugs (10) ist.

14. Verfahren nach einem der Ansprüche 12 oder 13 mit den weiteren Schritten
- kontinuierliches Ermitteln des Abstands (x) zwischen der Vorrichtung (28, 42) und dem Fahrzeug (10).
- Aufzeichnen eines Zeitverlaufs des Abstands (x) zwischen der Vorrichtung (28, 42) und dem Fahrzeug (10).
